# EUROPEAN PATENT APPLICATION

(11) **EP 1 596 447 A1**
(43) Date of publication of application: **16.11.2005**
(21) Application number: 05103951.9
(22) Date of filing: 11.05.2005
(51) Int. Cl.: H01M 2/12

(54) **Plug-holder strip for batteries and battery including the strip**

(30) Priority: 14.05.2004 IT TO20040068
(71) Applicant: Exide Italia S.r.l., 24058 Romano di Lombardia (Bergamo) (IT)
(72) Inventor: Fossati, Giuseppe, 24050 Mozzanica (Bergamo) (IT); Ferla, Giordano, 26010 Capralba (Cremona) (IT); Sanpellegrini, Mauro, 26025 Pandino (Cremona) (IT)
(74) Representative: Rondano, Davide

(57) **Abstract**

A plug-holder strip for an accumulator battery comprises a plurality of plugs (14) to be fitted into complementary holes (20) of a cover (22) of a battery; a support structure (4, 6) which interconnects the said plugs (14), comprising a lower half-shell (6) and an upper half-shell (4) which are connected together, in which each plug (14) is fitted into a corresponding through hole (12) of the lower half-shell (6), an annular sealing member (26) which surrounds the said hole (12) being interposed between the enlarged head portion (16) of the said plug (14) and the lower half-shell (6) and forming a seal between these components; and retaining means (28), associated with the support structure (4, 6), which compress the plug on to the said sealing member (26) to provide the seal. The retaining means (28) comprise a plurality of stop members (28) which extend from the upper half-shell (4) and which engage the head portion (16) of each plug, each of the said stop members (28) being fixed at one end to the lower half-shell (6).

## Description

The present invention relates to a plug-holder strip for an accumulator battery and to a battery including the strip.

In particular, the invention relates to a plug-holder strip of the type comprising:
- a plurality of plugs to be fitted into complementary holes of a cover of the battery;
- a support structure which interconnects the said plugs, comprising a lower half-shell and an upper half-shell which are connected together, in which each plug is fitted into a corresponding through hole of the lower half-shell, an annular sealing member which surrounds the said hole being interposed between an enlarged head portion of the said plug and the lower half-shell and forming a seal between these components; and
- retaining means, associated with the support structure, which compress the plug on to the said sealing member to provide the seal while still allowing the plug to move with respect to the support structure to enable the plug to be aligned with the corresponding hole of the cover.

A strip structure having the characteristics listed above is described in US Patent 6,485,860. In this structure, the plugs are connected to the lower half-shell of the support structure by means of a plurality of resilient retaining members which are formed as teeth and which extend from the lower half-shell. The friction generated by the contact between a gasket and the lower half-shell and the retaining members interact to hold each plug in position, while giving the plug a freedom of movement such that the axis of each plug, orthogonal to the plane of the half-shell, can be aligned or made to coincide with the axis of the complementary hole in the cover.

Although the structure described in the cited patent can effectively resolve the problems relating to the sealing and the alignment of the plugs with respect to the cover of the battery, it can give rise to problems of reliability and durability, since the resilient toothlike retaining members can be subject to breakage.

The object of the present invention is to provide an improved solution which resolves the aforesaid problems relating to the alignment and the sealing, while having greater robustness and less of a tendency to break.

With this object in mind, the invention proposes a plug-holder strip for accumulator batteries, of the aforesaid type, characterized in that the retaining means comprise a plurality of stop members which extend from the upper half-shell and which engage the head portion of each plug, each of the said stop members being fixed by one end to the lower half-shell.
The invention also proposes an accumulator battery, particularly a starter battery, comprising a plurality of cells in series and comprising the aforesaid plug-holder strip.

Further characteristics and advantages of the invention will be made clear by the following detailed description, which refers to the attached drawings provided purely by way of example and without restrictive intent, in which:

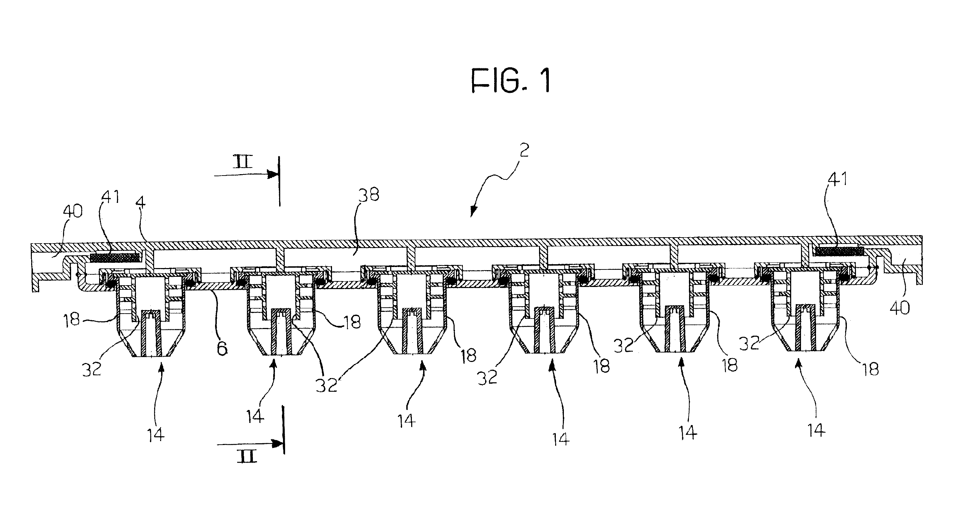

- Figure 1 is a view in vertical section of a plug-holder strip according to the invention; and

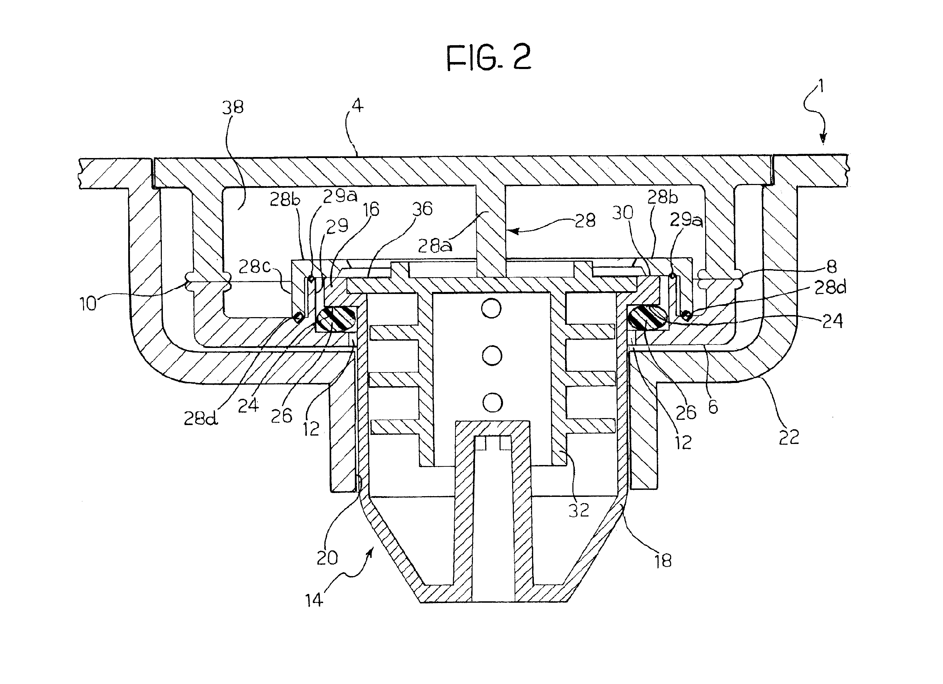

- Figure 2 is a view in section through the line II-II of Figure 1, in which the plug-holder strip is additionally mounted on an accumulator battery.

In the attached drawings, reference is made, for the sake of simplicity, to a plug-holder strip for a normal starter battery, generally consisting of six cells in series; clearly, however, the present invention is equally applicable to a battery consisting of any number of cells in series, and also to batteries for uses other than starting.

In the embodiment shown in the drawings, the plug-holder strip is indicated as a whole by the number 2 and the support structure is a boxlike structure, formed by an upper half-shell 4 and a lower half-shell 6, connected together, by welding for example, at 8 and 10, and forming an inner chamber 38 for collecting the gases.
The lower half-shell 6 has a plurality of tubular plugs 14, each having an enlarged head portion 16 and a body portion 18 to be fitted into complementary holes 20 of a cover 22 of a battery 1.

The head portion 16 of each plug is substantially formed as a flange and has a lower shoulder surface 24 to bear on a toroidal sealing gasket 26 which surrounds the hole 12 and bears on the inner surface of the lower half-shell 6.

Each plug is held in position by means of a corresponding stop member 28. This stop member 28 is formed in one piece with the upper half-shell 4, and has a stem 28a, which extends from the upper half-shell 4, and an annular head disc 28b, which can engage the upper surface 30 of the head portion of each plug. The annular disc 28b is connected to the stem 28a by connecting portions (not shown) such as ribs. The annular head disc has a peripheral collarlike extension 28c, whose free end can be fixed, at 28d, to the inner surface of the lower half-shell 6. In its turn, this inner surface of the lower half-shell 6 has a collarlike extension 29 which extends coaxially with the collarlike extension 28c of the annular disc 28b and inside this extension. The collarlike extension 29 interacts with the inner surface of the lower half-shell 6 to form a seat for the sealing gasket 26. Additionally, the free end of the collarlike extension 29 can be fixed, at 29a, to the lower surface of the annular head disc 28b of the stop member 28.
Preferably, the fixing 28d of the collarlike extension 28c of the annular head disc 28b to the inner surface of the lower half-shell and the fixing 29a of the collarlike extension 29 of the lower half-shell to the lower surface of the annular head disc 28b are carried out by welding, and even more preferably by ultrasonic welding. In this way, the stop members 28 can be fixed to the lower half-shell 6 at the same time as the fixing of the upper half-shell 4, thus compressing the toroidal sealing gasket 26 in its seat, between the lower half-shell 6 and the head portion 16 of the plug.

As can be seen, the arrangement is such that the gasket 26 can provide an effective seal, preventing the gases guided through the plugs into the chamber 38 formed between the two half-shells 6 and 4 from emerging through the holes 12. At the same time, the friction generated by the contact between the gasket 26 and the lower half-shell 6 and the retaining means 28 interact to hold each plug in position, while giving the plug a freedom of movement such that the axis of each plug, orthogonal to the plane of the half-shell 6, can be aligned or made to coincide with the axis of the complementary hole 20 in the cover.

In the structure of the plug-holder strip according to the invention, the plugs are thus connected to the support structure by means of the sealing gasket 26 and the stop members 28 acting as retaining means, which ensure the retention and the necessary mobility of the said plugs at all times.

The structure of each plug can be of a conventional and known type. Each plug comprises, for example, a tubular labyrinth element 32 housed in the body 18 of the plug 14. The labyrinth element 32 has a head flange portion 36, housed in a seat formed in the head 16 of the plug. The free end of the stem 28a of the stop member 28 bears on this head portion 36, thus holding it against the head 16 of the plug 14. The gases from the labyrinth pass through holes (not shown) formed in the head portion 36, penetrate into the chamber 38 formed between the two half-shells 4 and 6, which acts as a collector for the gases from each plug, and can be discharged to the exterior through one or more lateral holes 40. Each hole 40 is positioned in series with a porous pad 41 of a known type, acting as a flame arresting element.

Clearly, the structure of each plug can be of a different type, for example comprising a semi-permeable membrane filter such as that described in British Patent GB-2 327 141.

## Claims

1. Plug-holder strip for an accumulator battery, comprising:
- a plurality of plugs (14) to be fitted into complementary holes (20) of a cover (22) of a battery;
- a support structure (4, 6) which interconnects the said plugs (14), comprising a lower half-shell (6) and an upper half-shell (4) which are connected together, in which each plug (14) is fitted into a corresponding through hole (12) of the lower half-shell (6), an annular sealing member (26) which surrounds the said hole (12) being interposed between the enlarged head portion (16) of the said plug (14) and the lower half-shell (6) and forming a seal between these components; and
- retaining means (28), associated with the support structure (4, 6), which compress the plug on to the said sealing member (26) to provide the seal while still allowing the plug (14) to move with respect to the support structure to enable the plug to be aligned with the corresponding hole of the cover;
**characterized in that**
the said retaining means (28) comprise a plurality of stop members (28) which extend from the upper half-shell (4) and which engage the head portion (16) of each plug, the said stop members (28) being fixed at one end to the said lower half-shell (6).

2. Plug-holder strip according to Claim 1, in which each said stop member (28) comprises a stem (28a) extending from the upper half-shell (4) and a head disc (28b) bearing on the head portion (16) of the said plug (14).

3. Plug-holder strip according to Claim 2, in which the said head disc (28b) has a peripheral collarlike extension (28c), whose free end can be fixed to the said lower half-shell (6).

4. Plug-holder strip according to Claim 3, in which the said lower half-shell (6) has a collarlike extension (29) extending coaxially with the said extension (28c) of the said head disc (28b).

5. Plug-holder strip according to Claim 4, in which the free end of the said collarlike extension (29) of the said lower half-shell (6) can be fixed to a surface of the said head disc (28b).

6. Plug-holder strip according to Claim 5, in which the collarlike extension (29) of the lower half-shell (6) is inside the collarlike extension (28c) of the head disc (28b).

7. Accumulator battery comprising a plug-holder strip according to any one of Claims 1 to 6.
